(19) Europäisches Patentamt / European Patent Office / Office européen des brevets

(11) **EP 2 486 440 B1**

(12) **FASCICULE DE BREVET EUROPEEN**

(45) Date de publication et mention
de la délivrance du brevet:
**28.08.2013 Bulletin 2013/35**

(21) Numéro de dépôt: **10771059.2**

(22) Date de dépôt: **07.10.2010**

(51) Int Cl.:
**G02B 27/22** (2006.01)     **G02C 7/10** (2006.01)
**H04N 13/04** (2006.01)     **G02F 1/133** (2006.01)

(86) Numéro de dépôt international:
**PCT/EP2010/065026**

(87) Numéro de publication internationale:
**WO 2011/042505 (14.04.2011 Gazette 2011/15)**

(54) **LUNETTES A CRISTAUX LIQUIDES A BRUIT DE COMMUTATION ATTENUE**

FLÜSSIGKRISTALLLINSEN MIT GEDÄMPFTEM SCHALTGERÄUSCH

LIQUID CRYSTAL LENSES HAVING ATTENUATED SWITCHING NOISE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.10.2009 FR 0904834**

(43) Date de publication de la demande:
**15.08.2012 Bulletin 2012/33**

(73) Titulaire: **VOLFONI R&D
75001 Paris (FR)**

(72) Inventeurs:
• **HENKINET, Thierry**
**F-75001 Paris (FR)**
• **CAILLAUD, Bertrand**
**F-92100 Boulogne-billancourt (FR)**

(74) Mandataire: **Guérin, Jean-Philippe et al
Opilex
310 avenue Berthelot
69008 Lyon (FR)**

(56) Documents cités:
**EP-A2- 1 280 361     GB-A- 2 314 169
JP-A- 2007 110 683     US-A1- 2007 242 015**

**EP 2 486 440 B1**

**Description**

L'invention concerne les lunettes à cristaux liquides, et en particulier les lunettes à cristaux liquides dont les verres sont alternativement rendus transparents ou opaques.

Des lunettes à cristaux liquides dans lesquelles on alterne dynamiquement entre un état transparent et un état opaque sont connues. De telles lunettes sont notamment connues dans le domaine de la vision tridimensionnelle par stéréoscopie ou dans le domaine de l'affichage crypté.

De telles lunettes sont notamment utilisées dans le domaine de la visualisation de contenus numériques en trois dimensions, par exemple dans des salles de cinéma. De telles lunettes comprennent un obturateur pour chaque oeil. Chaque obturateur comprend une cellule à cristaux liquides. Une cellule à cristaux liquides est munie de deux substrats disposés en vis-à-vis et généralement réalisés en matériau rigide et transparent tel que du verre. Les substrats comprennent respectivement un polariseur et un analyseur croisés. Un cristal liquide est disposé entre les deux substrats. Les cristaux liquides sont des matériaux dont on peut modifier les propriétés optiques, et en particulier la biréfringence en leur appliquant un champ électrique. Le champ électrique est généré au moyen d'une tension de commande appliquée entre les substrats par des électrodes minces transparentes. De façon connue en soi, le cristal liquide permet sélectivement à de la lumière polarisée par le polariseur de traverser ou non (ou pratiquement pas) l'analyseur en formant ainsi un obturateur optique commandé en tension.

La projection d'images stéréoscopiques utilise actuellement la projection alternée de deux séquences vidéo prises selon des angles de vue distincts. Une première séquence vidéo est ainsi destinée à l'oeil gauche, une deuxième séquence vidéo étant destinée à l'oeil droit, créant ainsi une impression de relief. La fréquence d'échantillonnage imposée par le standard du cinéma pour une séquence vidéo étant supérieure à 48 Hz (pour que la cadence de défilement des images ne soit pas perceptible par l'oeil), la fréquence de projection sur un écran de cinéma est d'au moins 96 Hertz car chaque oeil ne doit voir que la séquence qui lui est destinée. Par conséquent, la fréquence de commutation de l'obturateur d'un oeil est également au moins égale à 48 Hz. Certains standards imposent une fréquence de projection égale à 144 Hertz, soit une fréquence de commutation de 72 Hz.

Dans une salle de cinéma, on place généralement un émetteur infrarouge. L'émetteur infrarouge émet un signal spécifique de synchronisation des lunettes avec les séquences vidéo du projecteur. Les lunettes comprennent un circuit électronique détectant le signal de synchronisation et générant un signal d'adressage des obturateurs. Le signal d'adressage des obturateurs permet de réaliser une commutation des cellules de cristal liquide en synchronisation avec les séquences vidéo projetées sur l'écran de la salle de cinéma.

Pour améliorer la qualité des images perçues avec les lunettes, trois critères principaux sont à prendre en compte. Un premier critère concerne le temps de réponse du cristal liquide (temps de commutation vers l'état opaque et temps de commutation vers l'état transparent) qui doit être relativement réduit. Le respect de ce critère conduit généralement à choisir un cristal liquide smectique présentant un faible temps de relaxation, et à appliquer des signaux d'adressage présentant des fronts abrupts. Un deuxième critère est le niveau de transparence de l'état transparent, celui-ci devant laisser passer un maximum de lumière avec un respect des couleurs projetées optimales. Un troisième critère concerne le niveau d'opacité de l'état opaque, qui doit être suffisamment élevé pour rendre imperceptible la séquence destinée à l'autre oeil.

Les lunettes étant placées sur le visage de l'utilisateur, il est également important d'en limiteur le poids et l'encombrement. Par conséquent, les substrats en verre de la cellule présentent généralement une épaisseur relativement faible comprise entre 0,5 et 1 mm. Avec un cristal liquide de type smectique, on peut également limiter l'épaisseur de cristal liquide entre les substrats à environ 1 a 2 $\mu$m.

De telles lunettes présentent cependant des inconvénients. En effet, l'amplitude des champs électriques générés et la fréquence de commutation des lunettes induisent des vibrations à l'origine de bruit dans le domaine audible. Les lunettes étant disposées sur le visage de l'utilisateur, ces bruits sont proches de l'appareil auditif et sont donc particulièrement gênants lors de la visualisation du film. L'amplitude des bruits est d'autant plus élevée que le poids des verres des substrats est réduit. Par conséquent, l'allégement de telles lunettes est limité par l'apparition de ces problèmes de bruit.

De tels problèmes apparaissent notamment dans les lunettes à cristaux liquides décrites dans le document JP2007-110683. Ce document décrit notamment une période de fermeture durant laquelle les deux obturateurs sont simultanément rendus opaques.

L'invention vise à résoudre un ou plusieurs de ces inconvénients. L'invention porte ainsi sur des lunettes à cristaux liquides à transmission lumineuse commutable dynamiquement, comprenant:

- un obturateur incluant deux substrats transparents et une couche de cristal liquide nématique disposée entre les substrats ;
- un circuit de commande apte à appliquer alternativement une tension de polarisation et une tension de relaxation du cristal liquide pour rendre l'obturateur passant ou opaque, les fronts descendants entre la tension de polarisation et la tension de relaxation présentant une durée comprise entre 80 et 900 $\mu$s.

Selon une variante, les fronts descendants entre la tension de polarisation et la tension de relaxation présentent une durée comprise entre 200 et 700 $\mu$s, de préférence comprise entre 300 et 600 $\mu$s.

Selon encore une variante, les lunettes comprennent une interface de réception d'un signal de synchronisation, le circuit de commande réalisant une commutation entre la tension de polarisation et la tension de relaxation à une fréquence égale à la fréquence du signal de synchronisation reçue.

Selon une autre variante, les fronts descendants présentent une pente inférieure à 250 kV/s.

Selon encore une autre variante, les fronts montants entre la tension de relaxation et la tension de polarisation présentent une durée comprise entre 200 et 2000 $\mu$s.

Selon une variante, les fronts montants présentent une pente inférieure à 50 kV/s.

Selon encore une variante, l'épaisseur de la couche de cristal liquide est inférieure à 3 $\mu$m.

Selon une autre variante, l'épaisseur d'un des substrats transparents est inférieure à 500 $\mu$m.

L'invention porte également sur un procédé de commutation d'un obturateur de lunettes à cristaux liquides nématiques, comprenant une étape d'application alternativement d'une tension de polarisation et d'une tension de relaxation du cristal liquide pour rendre l'obturateur passant ou opaque, les fronts descendants entre la tension de polarisation et la tension de relaxation présentant une durée comprise entre 80 et 900$\mu$s.

Selon une variante, la fréquence des fronts descendants de l'obturateur est supérieure à 48Hz.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe schématique d'un obturateur de lunettes à cristaux liquides ;
- la figure 2 est une vue en perspective schématique de l'obturateur ;
- la figure 3 est un chronogramme d'un signal de commande et de la réponse d'un obturateur à cristaux liquides selon l'état de la technique ;
- la figure 4 est un chronogramme d'un signal de commande d'un obturateur selon un exempte de mise en oeuvre de l'invention ;
- la figure 5 est un schéma électrique d'un exemple de circuit de commande pour la mise en oeuvre de l'invention.

L'invention propose des lunettes à cristaux liquides à transmission lumineuse commutable dynamiquement. Les lunettes comprennent deux obturateurs munis d'une couche de cristal liquide nématique pour rendre ces obturateurs sélectivement passants ou opaques. Les lunettes présentent par ailleurs un circuit de commande appliquant alternativement une tension de polarisation et une tension de relaxation du cristal liquide pour rendre l'obturateur soit passant, soit opaque. Les fronts descendants entre la tension de polarisation et la tension de relaxation présentent une durée comprise entre 80 et 900$\mu$s.

L'utilisation de tels signaux de commande permet de façon surprenante de réduire significativement le bruit généré par les lunettes lors des commutations. De plus, l'utilisation de cristal liquide de type nématique permet d'utiliser des tensions de polarisation d'un niveau modéré. Ainsi, l'amplitude des bruits générés est réduite. Par ailleurs, malgré l'utilisation de cristal liquide nématique et une durée de fronts descendants rallongée, la qualité d'image perçue n'est pas sensiblement détériorée.

De façon surprenante, on obtient ainsi une réduction du bruit en intervenant sur la tension de commande durant la phase de relaxation du cristal liquide, alors qu'il était communément admis que cette phase était peu génératrice de bruit puisque le temps de relaxation du cristal liquide (essentiellement défini par ses propriétés intrinsèques et son épaisseur) était relativement long comparé à son temps d'excitation.

Une telle durée de font descendant permet de limiter la variation des forces appliquées sur les substrats, et permet également de ralentir la vitesse des mouvements à l'intérieur du cristal liquide.

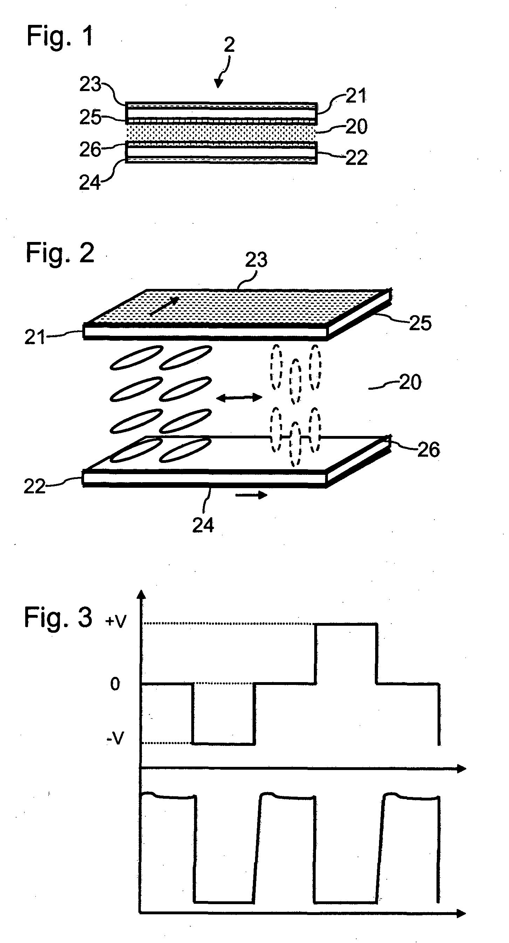

La figure 1 est une vue en coupe schématique d'un obturateur 2 destiné à être monté dans des lunettes selon l'invention. L'obturateur 2 comprend deux substrats en verre 21 et 22 disposés en vis-à-vis. Un film de polarisation 23 dit analyseur est disposé sur une première face du substrat 21. Une électrode de commande transparente 25 est disposée sur une deuxième face du substrat 21, à l'intérieur du volume délimité entre les substrats 21 et 22. Un film de polarisation 24 dit polariseur est disposé sur une première face du substrat 22. Une électrode de commande transparente 26 est disposée sur une deuxième face du substrat 22, à l'intérieur du volume délimité entre les substrats 21 et 22. Dans cet exemple, la polarisation du film 23 est perpendiculaire à la polarisation du film 24. Du cristal liquide nématique 20 est disposé dans le volume délimité entre les substrats 21 et 22. Ce cristal liquide pourra présenter une viscosité de 13,6 cPo, un indice no de 1,5133, un indice ne de 1,6932, une biréfringence de $\Delta n = n_0 - n_e = 0{,}1799$, et une plage de température de la phase nématique de $-20°C$ à $83,9°C$.

Des films d'orientation (non illustrés) peuvent être disposés entre les électrodes de commande 25 et 26 et le cristal liquide. De tels films d'orientation pourront par exemple présenter une direction de frottement destinée à favoriser certaines zones de vision à travers l'obturateur 2. On pourra par exemple utiliser des films dont l'orientation de frottement est antiparallèle afin de diminuer la torsion du cristal liquide 20.

La figure 2 représente schématiquement l'orientation du cristal liquide dans deux états de polarisation induits par les électrodes de commande 25 et 26. Dans l'exemple illustré en référence à la figure 2, l'obturateur 2 est passant lorsque le cristal liquide 20 est au repos, en l'absence d'application d'un champ électrique par l'intermédiaire des électrodes de commande 25 et 26. Lorsque l'obturateur 2 est passant, la lumière ayant traversé le polariseur 24 et le cristal liquide 20 présente la même polarisation que l'analyseur 23. L'obturateur 2 est opaque lorsque le cristal liquide 20 est excité par l'intermédiaire des électrodes de commande 25 et 26, une tension de polarisation +V ou -V étant appliquée entre elles. Lorsque l'obturateur 2 est opaque, la lumière ayant traversé le polariseur 24 et le cristal liquide 20 présente une polarisation perpendiculaire à celle de l'analyseur 23.

L'obturateur 2 est avantageusement constitué pour être passant lorsque le cristal liquide 20 est au repos. La qualité des états passant et opaque obtenus est ainsi optimisée. L'homme du métier pourra bien entendu également réaliser l'obturateur 2 pour qu'il soit opaque lorsque le cristal liquide 20 est au repos.

La figure 3 est un chronogramme représentant d'une part le niveau de la tension appliquée entre les électrodes 25 et 26, et d'autre part le niveau de transmission de l'obturateur 2. La tension de commande illustrée correspond à un profil selon l'art intérieur, dans lequel les fronts montants et les fronts descendants sont quasiment instantanés. Le niveau de transmission de l'obturateur 2 est élevé (passant) lorsque la tension entre les électrodes 25 et 26 est nulle. Le niveau de transmission de l'obturateur 2 est très faible (opaque) lorsque la tension entre les électrodes 25 et 26 est nulle.

Pour éviter une détérioration du cristal liquide nématique 20 par migration de charges, la tension moyenne appliquée entre les électrodes 25 et 26 doit être sensiblement nulle. Par conséquent, on alterne des créneaux à la tension +V et des créneaux à la tension -V. La tension +V et la tension -V correspondent toutes deux à un état opaque. Les créneaux à la tension +V et -V (d'amplitude V) sont séparés par des périodes à tensions nulles évitant l'application d'un champ sur le cristal liquide, c'est-à-dire l'application d'une tension de relaxation. Dans certaines applications, on peut également envisager que la tension de relaxation ne soit pas rigoureusement nulle. Les périodes des créneaux et les périodes d'excitation nulle sont sensiblement identiques. Le cristal liquide 20 subit une relaxation lors d'un front descendant de la tension appliquée par les électrodes de commande 25 et 26, en passant d'une excitation par une tension +V ou -V à une excitation nulle. Le niveau de tension V pourra avantageusement être compris entre 1 et 30V, et pourra par exemple être de l'ordre de 15V.

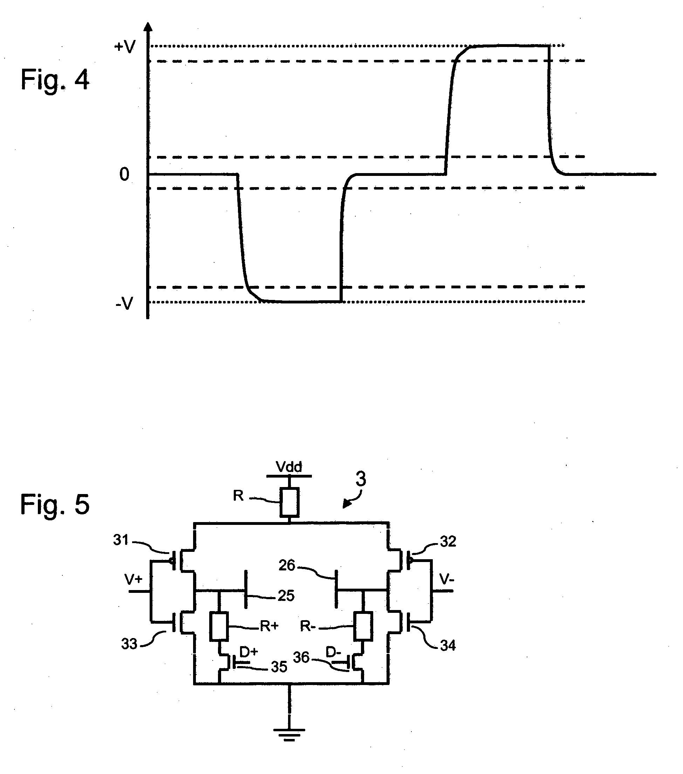

La figure 4 représente schématiquement un exemple de profil de tension de commande appliqué entre les électrodes de commande 25 et 26 selon un exemple de mise en oeuvre de l'invention. Comme dans l'exemple de la figure 3, l'état opaque de l'obturateur 2 est défini soit par un créneau de tension à +V, soit par un créneau de tension à -V. L'état passant de l'obturateur 2 est défini par une tension de relaxation nulle. Lors d'un front montant, la tension passe de la tension de relaxation nulle à une tension de polarisation, soit +V, soit -V. Lors d'un front descendant, la tension passe d'une tension de polarisation, soit +V, soit -V, à la tension de relaxation nulle.

Par la suite, on va définir la durée du front montant d'un créneau comme la durée pour passer de 10% de V à 90% de V. La durée du front descendant d'un créneau sera définie comme la durée pour passer de 90% de V à 10% de V.

Selon l'invention, on utilise une durée de front descendant comprise entre 80 et 900µs. Cette durée sera préférentiellement supérieure à 200, et avantageusement supérieure à 300 µs. De telles durées permettent de limiter sensiblement le bruit généré par l'obturateur 2 lors de son fonctionnement. Cette durée sera préférentiellement inférieure à 700µs, et avantageusement inférieure à 600µs. De telles durées permettent de dégrader au minimum la qualité de l'image lors de la commutation vers l'état transparent. Par ailleurs, de telles durées restent compatibles avec les fréquences de commutation requises pour un visionnage en stéréoscopie.

La durée du front descendant sera avantageusement adaptée au niveau de la tension V. Plus le niveau de tension V est élevé, plus la durée du front descendant sera importante, afin de réduire le bruit généré par l'obturateur 2. Afin de réduire le bruit généré par les commutations de l'obturateur 2, la pente du front descendant est avantageusement inférieure à 250kV/s.

Avantageusement, le bruit peut également être diminué en jouant sur la durée du front montant d'un créneau. La durée du front montant est avantageusement comprise entre 200 et 2000µs. Cette durée sera préférentiellement supérieure à 300µs, et avantageusement supérieure à 400µs. Cette durée sera préférentiellement inférieure à 1500 µs, et avantageusement inférieure à 1000µs, afin d'obtenir un passage relativement rapide à l'état opaque de l'obturateur 2. Afin de réduire le bruit généré par les commutations de l'obturateur 2 en fonction du niveau de tension V, on utilisera avantageusement une pente du front montant inférieure à 50kV/s.

Un obturateur 2 muni de substrats 21 et 22 de faibles épaisseurs est particulièrement propice à la génération de bruit lors de la commutation, l'amplitude des vibrations d'un substrat étant d'autant plus élevée que son épaisseur est faible. L'invention s'avère donc particulièrement appropriée pour un obturateur 2 muni d'au moins un substrat d'une épaisseur inférieure à 700µm, et plus particulièrement inférieure à 500µm.

Avantageusement, l'épaisseur de la couche de cristal liquide est relativement faible (par exemple comprise entre 0,8 et 3µm, et de préférence comprise entre 1 et 2µm) afin de réduire le temps de relaxation du cristal liquide noté

$\tau_{on}$, et ainsi le temps de réponse du cristal liquide. Lors de la relaxation, le cristal liquide n'est plus soumis à des forces extérieures et ses propriétés intrinsèques ainsi que le dimensionnement de l'obturateur 2 conditionnent le temps de relaxation.

Ceci est illustré par la formule suivante :

$$\tau_{on} \approx \nu \ d^2 \ /K\pi^2$$

avec d l'épaisseur du cristal liquide 20, $\nu$ sa viscosité et K sa constante élastique.

Par ailleurs, une épaisseur relativement faible de la couche de cristal liquide 20 permet d'accroître le champ généré par un créneau de tension à l'état opaque.

Le cristal liquide 20 présente des propriétés de biréfringence appropriées à son épaisseur, de façon à optimiser le spectre de transmission afin qu'il soit approximativement centré sur la réponse de l'oeil, soit approximativement à une longueur d'onde de 550nm.

Le temps de passage de l'état passant à l'état opaque est relativement rapide, car il est imposé par le champ généré par un créneau de tension. Plus le niveau de tension V d'un créneau est élevé, plus l'état opaque a un niveau d'opacité élevé, ce qui est une caractéristique recherchée pour les lunettes. Par contre, la majeure partie du son généré par les commutations de l'obturateur 2 provient des forces électrostatiques générées dans le cristal liquide.

En première approximation, un obturateur 2 est assimilable à un condensateur. Ainsi, l'application d'un champ électrique dans une capacité conduit à une accumulation d'énergie qui correspond au travail fourni pour charger cette dernière. Si on considère une capacité C, portant une charge +q sur une plaque et -q sur l'autre plaque, pour déplacer une charge infinitésimale dq d'une plaque à l'autre avec d'une différence de potentiel V=q/C, il faut fournir un travail :

dW=q/Cdq où W est le travail mesuré en joules, q est la charge mesurée en coulombs, et C est la capacité mesurée en farads ;

On peut alors calculer l'énergie accumulée dans la capacité en intégrant cette équation. Si l'on part avec une capacité non chargée (q=0) et que l'on déplace les charges d'une plaque à l'autre jusqu'à avoir les charges +Q and -Q sur l'une et l'autre plaque, il faut fournir le travail W:

$$W = 1/2 \ C^*V^2 = 1/2 \ V^2{}^*\varepsilon_o \ * \ \varepsilon_r \ * \ S \ /d$$

Dans cette formule, V est la tension de commande appliquée aux bornes de la cellule, S la surface, d l'épaisseur de la couche de cristal liquide (correspondant à l'espacement entre les plaques de la capacité) $\varepsilon_0$ et $\varepsilon_r$ sont respectivement les permittivités du vide et du matériau.

De ce travail découle une force électrostatique F qui, si on considère le niveau de tension V comme constant, est définie de la façon suivante :

$$F = d(W)/d(d) = (V^2/2) \ {}^*\varepsilon_o \ * \ \varepsilon_r \ * \ S \ * \ d(1/d) \ /d(d) = - \ V^2 \ * \ \varepsilon_o \ * \ \varepsilon_r \ * \ S \ /2d^2$$

L'amplitude de cette force baisse proportionnellement au carré de l'épaisseur d de la couche de cristal liquide. Ainsi, l'invention s'avère particulièrement appropriée lorsqu'elle est appliquée à des obturateurs à faible épaisseur de cristal liquide, dans lesquels l'amplitude des bruits potentiellement générés est beaucoup plus importante. L'invention s'avère particulièrement appropriée en conservant une bonne qualité d'opacité, en évitant de devoir réduire l'amplitude de la tension V pour réduire le bruit généré.

La figure 5 est un schéma électrique d'un exemple de circuit de commande 3 destiné à la mise en oeuvre de l'invention. Le circuit de commande 3 comprend une interface de réception d'un signal de synchronisation non illustré. Cette interface de réception est par exemple une interface de réception d'un signal infrarouge ou d'un signal radiofréquence. Le signal de synchronisation définit quel obturateur doit être rendu passant et à quel moment. L'interface de réception transforme le signal de synchronisation en des signaux de commande V+, V-, D+ et D- utilisés dans le circuit de commande 3.

Le circuit de commande 3 comprend des transistors PMos 31 et 32 et des transistors NMos 32 à 36. Les transistors 31 et 33 sont connectés en série entre un potentiel Vdd et un potentiel de masse. Le signal V+ est appliqué sur la grille des transistors 31 et 33. L'électrode de commande 25 est connectée à la jonction entre les transistors 31 et 33. Le transistor 35 est connecté en série avec une résistance R+. La résistance R+ est connectée à l'électrode de commande 25. Un signal de commande D+ est appliqué sur la grille du transistor 35. Les transistors 32 et 34 sont connectés en série entre un potentiel Vdd et un potentiel de masse. Le signal V- est appliqué sur la grille des transistors 32 et 34. L'électrode de commande 26 est connectée à la jonction entre les transistors 32 et 34. Le transistor 36 est connecté en série avec une résistance R-. La résistance R- est connectée à l'électrode de commande 26. Un signal de commande D- est appliqué sur la grille du transistor 36. Une résistance R est connectée en série entre les transistors 31 et 32 et le potentiel Vdd.

A l'état passant de l'obturateur 2 associé au circuit de commande 3, une tension nulle est appliquée entre les électrodes 25 et 26. Les signaux de commande V+ et V- sont à l'état haut pour rendre les transistors 33 et 34 passants et les transistors 31 et 32 bloqués. Une même tension de masse est appliquée sur les électrodes de commande 25 et 26. Les signaux de commande D+ et D- sont à l'état haut, de sorte que les transistors 35 et 36 sont passants.

A l'état opaque de l'obturateur 2 associé au circuit de commande 3, une tension de commande de +V ou -V est maintenue entre les électrodes 25 et 26. Dans un premier cas, le signal de commande V+ est à l'état haut et le signal de commande V- est à l'état bas. Les transistors 31 et 34 sont donc bloqués et les transistors 32 et 33 sont passants. La tension Vdd est appliquée sur l'électrode 26 et la tension de masse est appliquée sur l'électrode 25. Les signaux de commande D+ et D- sont à l'état bas pour bloquer les transistors 35 et 36. Dans un second cas, le signal de commande V- est à l'état haut et le signal de commande V+ est à l'état bas. Les transistors 32 et 33 sont donc bloqués et les transistors 31 et 34 sont passants. La tension Vdd est appliquée sur l'électrode 25 et la tension de masse est appliquée sur l'électrode 26. Les signaux de commande D+ et D- sont à l'état bas pour bloquer les transistors 35 et 36.

Lors d'un front descendant, on applique les signaux de commande V+ et V- à l'état haut et les signaux D+ et D- à l'état haut. Dans le premier cas, la capacité interne C formée par l'obturateur 2 (par exemple comprise entre 10 et 60nF) combinée à la résistance R- forme un circuit série présentant une constante de temps de décharge définie par la valeur C*R-. Cette constante de temps définit la durée du front descendant dans ce premier cas. Dans le second cas, la capacité interne C formée par l'obturateur 2 combinée à la résistance R+ forme un circuit série présentant une constante de temps de décharge définie par la valeur C*R+. Cette constante de temps définit la durée du front descendant dans ce second cas.

Lors d'un front montant, la résistance R définit la constante de temps et ainsi la durée de ce front montant.

Les durées des fronts montants et descendants peuvent induire un retard dans l'adressage des obturateurs 2. Pour pallier à cet inconvénient, on pourra avantageusement avancer les signaux de synchronisation d'un certain décalage pour tenir compte de ce retard.

De façon indépendante, l'invention porte également sur la durée du front montant entre la tension de relaxation et la tension de polarisation, selon l'enseignement détaillé précédemment.

## Revendications

1. Lunettes à cristaux liquides à transmission lumineuse commutable dynamiquement, comprenant :

   - un obturateur (2) incluant deux substrats transparents (21, 22) et une couche de cristal liquide nématique (20) disposée entre les substrats (21, 22) ;
   - un circuit de commande apte à appliquer alternativement une tension de polarisation et une tension de relaxation du cristal liquide pour rendre l'obturateur (2) passant ou opaque,
   **caractérisées en ce que** les fronts descendants entre la tension de polarisation et la tension de relaxation présentant une durée comprise entre 80 et 900 $\mu$s.

2. Lunettes à cristaux liquides selon la revendication 1, dans lesquelles les fronts descendants entre la tension de polarisation et la tension de relaxation présentent une durée comprise entre 200 et 700 $\mu$s, de préférence comprise entre 300 et 600 $\mu$s.

3. Lunettes à cristaux liquides selon la revendication 1 ou 2, comprenant une interface de réception d'un signal de synchronisation, le circuit de commande réalisant une commutation entre la tension de polarisation et la tension de relaxation à une fréquence égale à la fréquence du signal de synchronisation reçue.

4. Lunettes à cristaux liquides selon l'une quelconque des revendications précédentes, dans lesquelles les fronts descendants présentent une pente inférieure à 250 kV/s.

5. Lunettes à cristaux liquides selon l'une quelconque des revendications précédentes, dans lesquelles les fronts montants entre la tension de relaxation et la tension de polarisation présentent une durée comprise entre 200 et 2000 µs.

6. Lunettes à cristaux liquides selon la revendication 5, dans lesquelles les fronts montants présentent une pente inférieure à 50 kV/s.

7. Lunettes à cristaux liquides selon l'une quelconque des revendications précédentes, dans lesquelles l'épaisseur de la couche de cristal liquide (20) est inférieure à 3 µm.

8. Lunettes à cristaux liquides selon l'une quelconque des revendications précédentes, dans lesquelles l'épaisseur d'un des substrats transparents (21, 22) est inférieure à 500 µm.

9. Procédé de commutation d'un obturateur (2) de lunettes à cristaux liquides nématiques, comprenant une étape d'application alternativement d'une tension de polarisation et d'une tension de r laxation du cristal liquide pour rendre l'obturateur passant ou opaque,
**caractérisé en ce que** les fronts descendants entre la tension de polarisation et la tension e relaxation présentant une durée comprise entre 80 et 900µs.

10. Procédé de commutation d'un obturateur (2) de lunettes à cristaux liquides nématiques selon la revendication 9, dans lequel la fréquence des fronts descendants de l'obturateur (2) est supérieure à 48Hz.


**Patentansprüche**

1. Flüssigkristallgläser mit dynamisch umschaltbarer Lichtübertragung, umfassend:

    - ein Verschlusselement (2), umfassend zwei transparente Substrate (21, 22) und eine nematische Flüssigkristallschicht (20), die zwischen den Substraten (21, 22) angeordnet ist;
    - eine Steuerschaltung, die geeignet ist, alternativ eine Polarisationsspannung und eine Relaxationsspannung des Flüssigkristalls anzulegen, um das Verschlusselement (2) durchlässig oder dicht zu machen,
    **dadurch gekennzeichnet, dass** die absteigenden Fronten zwischen der Polarisationsspannung und der Relaxationsspannung eine Dauer zwischen 80 und 900 µs aufweisen.

2. Flüssigkristallgläser nach Anspruch 1, bei denen die absteigenden Fronten zwischen der Polarisationsspannung und der Relaxationsspannung eine Dauer zwischen 200 und 700 µs, vorzugsweise zwischen 300 und 600 µs aufweisen.

3. Flüssigkristallgläser nach Anspruch 1 oder 2, umfassend eine Empfangsschnittstelle für ein Synchronisationssignal, wobei die Steuerschaltung eine Umschaltung zwischen der Polarisationsspannung und der Relaxationsspannung bei einer Frequenz gleich der Frequenz des empfangenen Synchronisationssignals durchführt.

4. Flüssigkristallgläser nach einem der vorhergehenden Ansprüche, bei denen die absteigenden Fronten ein Gefällt unter 250 kV/s aufweisen.

5. Flüssigkristallgläser nach einem der vorhergehenden Ansprüche, bei denen die aufsteigenden Fronten zwischen der Relaxationsspannung und der Polarisationsspannung eine Dauer zwischen 200 und 2000 µs aufweisen.

6. Flüssigkristallgläser nach Anspruch 5, bei denen die aufsteigenden Fronten ein Gefälle unter 50 kV/s aufweisen.

7. Flüssigkristallgläser nach einem der vorhergehenden Ansprüche, bei denen die Dicke der Flüssigkristallschicht (20) geringer als 3 µm ist.

8. Flüssigkristallgläser nach einem der der vorhergehenden Ansprüche, bei denen die Dicke eines der transparenten Substrate (21, 22) geringer als 500 µm ist.

9. Umschaltverfahren für ein Verschlusselement (2) von nematischen Flüssigkristallgläsern, umfassend einen Schritt des alternativen Anlegens einer Polarisationsspannung und einer Relaxationsspannung des Flüssigkristalls, um das Verschlusselement durchgängig oder dicht zu machen, **dadurch gekennzeichnet, dass** die absteigenden Fronten zwischen der Polarisationsspannung und der Relaxationsspannung eine Dauer zwischen 80 und 900 µs aufweisen.

10. Umschaltverfahren für ein Verschlusselement (2) von nematischen Flüssigkristallgläsern nach Anspruch 9, bei dem die Frequenz der absteigenden Fronten des Verschlusselements (2) größer als 48 Hz ist.

**Claims**

1. Liquid crystal glasses having dynamically switchable light transmission, comprising:

   - a shutter (2) including two transparent substrates (21, 22) and a nematic liquid crystal layer (20) arranged between the substrates (21, 22); and
   - a control circuit capable of alternately applying a bias voltage and a relaxation voltage across the liquid crystal to render the shutter (2) clear or opaque, **characterised in that** the falling edges between the bias voltage and the relaxation voltage have a duration between 80 and 900 $\mu$s.

2. The liquid crystal glasses according to Claim 1, wherein the falling edges between the bias voltage and the relaxation voltage have a duration between 200 and 700 $\mu$s, preferably between 300 and 600 $\mu$s.

3. The liquid crystal glasses according to Claim 1 or 2, comprising an interface for receiving a synchronisation signal, the control circuit switching between the bias voltage and the relaxation voltage at a frequency equal to the frequency of the received synchronisation signal.

4. The liquid crystal glasses according to one of the preceding claims, wherein the falling edges have a slope of less than 250 kV/s.

5. The liquid crystal glasses according to one of the preceding claims, wherein the rising edges between the relaxation voltage and the bias voltage have a duration between 200 and 2000 $\mu$s.

6. The liquid crystal glasses according to claim 5, wherein the rising edges have a slope of less than 50 kV/s.

7. The liquid crystal glasses according to one of the preceding claims, wherein the thickness of the liquid crystal layer (20) is less than 3 $\mu$m.

8. The liquid crystal glasses according to one of the preceding claims, wherein the thickness of one of the transparent substrates (21, 22) is less than 500 $\mu$m.

9. A method for switching a shutter (2) of nematic liquid crystal glasses, said method comprising a step of alternately applying a bias voltage and a relaxation voltage across the liquid crystal in order to render said shutter clear or opaque, **characterised in that** the falling edges between the bias voltage and the relaxation voltage have a duration between 80 and 900 $\mu$s.

10. The method for switching a shutter (2) of nematic liquid crystal glasses according to Claim 9, wherein the frequency of the falling fronts of the shutter (2) is greater than 48 Hz.

Fig. 1

Fig. 2

Fig. 3

Fig. 4

Fig. 5

**EP 2 486 440 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2007110683 A